# EUROPEAN PATENT APPLICATION

(11) **EP 4 571 157 A1**
(43) Date of publication of application: **18.06.2025**
(21) Application number: 24216417.6
(22) Date of filing: 29.11.2024
(51) Int. Cl.: F16K 5/06, F16K 11/087, F16K 27/06, F16K 31/04, B60K 11/02

(54) **FLUID DISTRIBUTION VALVE HOUSING AND SEAL ARRANGEMENT**

(30) Priority: 14.12.2023 US 202318539422
(71) Applicant: Stoneridge Control Devices, Inc., Novi MI 48377 (US)
(72) Inventor: STEINMAN, Robert James, Lexington 44904 (US)
(74) Representative: Marks & Clerk LLP

(57) **Abstract**

A coolant distributor valve for a vehicle cooling system includes a housing that includes a shaft support housing portion (16) that provides a monolithic, unitary structure. The shaft support housing portion has a first side opposite a second side. The first and second sides respectively include first and second bores. A valve (54) is arranged in the housing adjacent to the first side. Electronic components are arranged in the housing adjacent to the second side. The electronic components are configured to move the valve between multiple positions. First and second seals (58, 60) are respectively mounted in the first and second bores. A shaft extends through and engages the seals. The shaft operatively connects the electronic components to the valve.

## Description

### TECHNICAL FIELD

This disclosure relates to a fluid distributor valve for use in vehicle cooling systems, for example.

### BACKGROUND

A typical modern vehicle includes various components and subsystems for which it is desirable to regulate the temperature (i.e., heating and/or cooling to a desired temperature). One or more cooling loops include one or more heat exchangers through which one or more fluids are circulated in a controlled manner to provide cooling fluid at a desired temperature to the components. As vehicles have become more complex, the complexity of the cooling system has increased as well.

A typical cooling system found in vehicles such as those having electrified and/or hybrid drivetrains tend to be highly distributed architectures with a complex maze of cooling loops, sub-loops, pumps, and heat exchanges. Coolant distributor valves, controllers and temperature sensors used to direct the coolant through these cooling systems are separated from one another and distributed throughout the vehicle.

Coolant distributor valves include a valve disposed within a coolant passage that regulates the flow of fluid between fluid paths within the cooling system. There may be one or more seals used to retain the fluid in its coolant passage. If electronics are also housed within the coolant distributor valve, any leakage past seals can reach the electronics, damaging them.

### SUMMARY

In one exemplary embodiment, a coolant distributor valve for a vehicle cooling system includes a housing that includes a shaft support housing portion that provides a monolithic, unitary structure. The shaft support housing portion has a first side opposite a second side. The first and second sides respectively include first and second bores. A valve is arranged in the housing adjacent to the first side. Electronic components are arranged in the housing adjacent to the second side. The electronic components are configured to move the valve between multiple positions. First and second seals are respectively mounted in the first and second bores. A shaft extends through and engages the seals. The shaft operatively connects the electronic components to the valve.

In a further embodiment of any of the above, the shaft support housing portion is provided by a molded, cast and/or machined single piece part.

In a further embodiment of any of the above, the housing includes an electronics housing portion that is secured to the shaft support housing portion to enclose the electronic components.

In a further embodiment of any of the above, the shaft support housing portion provides a valve housing portion that receives the valve, and the housing includes a cover that is secured to the valve housing portion to enclose the valve.

In a further embodiment of any of the above, a valve housing portion is secured to the shaft support housing portion. The valve is arranged in the valve housing portion.

In a further embodiment of any of the above, the housing includes a cover that is secured to the valve housing portion to enclose the valve.

In a further embodiment of any of the above, a cavity is provided between the first and second seals, and a vent hole is provided in the shaft support housing portion. The vent hole is configured to fluidly connect the cavity to atmosphere.

In a further embodiment of any of the above, the coolant distributor valve includes a printed circuit board (PCB) that is arranged in the electronics housing portion, and an electrical actuator that is electrically connected to the PCB and arranged in the electronics housing portion.

In a further embodiment of any of the above, the electrical actuator is a motor, and a gear train is coupled between the motor and the valve.

In a further embodiment of any of the above, the shaft is provided by first and second shafts that are coupled to one another. The first shaft extends from the valve, and the second shaft extends from the gear train.

In a further embodiment of any of the above, the first and second shafts are nested relative to one another is splined relationship.

In a further embodiment of any of the above, the first and second shafts respectively include first and second outer diameters. The first and second outer diameters respectively engage the first and second seals.

In a further embodiment of any of the above, a vehicle cooling system includes the coolant distributor valve that includes multiple cooling loops. The coolant distributor valve interconnects at least two of the multiple cooling loops, and the valve is configured to move between multiple positions to direct a desired cooling flow through the at least two of the multiple cooling loops.

In a further embodiment of any of the above, the cooling loops include at least two of a battery, a vehicle cabin, a charging electronics and a motor.

In another exemplary embodiment, a method of assembling a coolant distributor valve includes providing a housing that includes a shaft support housing portion that provides a monolithic, unitary structure. The shaft support housing portion has a first side opposite a second side. The first and second sides respectively include first and second bores. A first seal is installed in the first bore. A second seal is installed in a second bore. A valve is inserted in the housing adjacent to the first side. Electronic components are arranged in the housing adjacent to the second side, the electronic components are configured to move the valve between multiple positions. A shaft is extended through and engages the first and second seals, the shaft operatively connects the electronic components to the valve.

In a further embodiment of any of the above, the first seal installing step is performed before the valve inserting step.

In a further embodiment of any of the above, the second seal installing step is performed before the electronic components arranging step.

In a further embodiment of any of the above, the inserting step includes the shaft extending step through and engaging the first seal, and includes a step of assembling a gear train in the housing. The gear train assembling step includes the shaft extending step through and engaging the second seal.

In a further embodiment of any of the above, the extending step includes extending a first shaft from the valve to engage the first seal, and extending a second shaft from the geartrain to engage the second seal. The first and second shafts are coupled to one another.

In a further embodiment of any of the above, the method includes a step of forming a cavity with the first and second seals, the shaft support housing portion and the shaft. The shaft support housing includes a vent hole that is in fluid communication with atmosphere.

### BRIEF DESCRIPTION OF THE DRAWINGS

The disclosure can be further understood by reference to the following detailed description when considered in connection with the accompanying drawings wherein:
Figure 1 is a schematic of one example vehicle cooling system.
Figure 2 is a perspective view of a disclosed coolant distributor valve.
Figure 3 is a cross-section of the coolant distributor valve taken along line 3-3 in Figure 2.
Figure 4 is a cross-section of the coolant distributor valve taken along line 4-4 in Figure 2.
Figure 5 is an enlarged view of Figure 4.
Figure 6 illustrates a portion of a housing shown in 5, but without any other components installed.
Figure 7 illustrates a portion of another example housing that is similar to Figure 6.
Figure 8 is a cross-section similar to that of Figure 4, but with the housing shown in Figure 7.
Figure 9 is an enlarged view of Figure 8.

The embodiments, examples and alternatives of the preceding paragraphs, the claims, or the following description and drawings, including any of their various aspects or respective individual features, may be taken independently or in any combination. Features described in connection with one embodiment are applicable to all embodiments, unless such features are incompatible.

### DETAILED DESCRIPTION

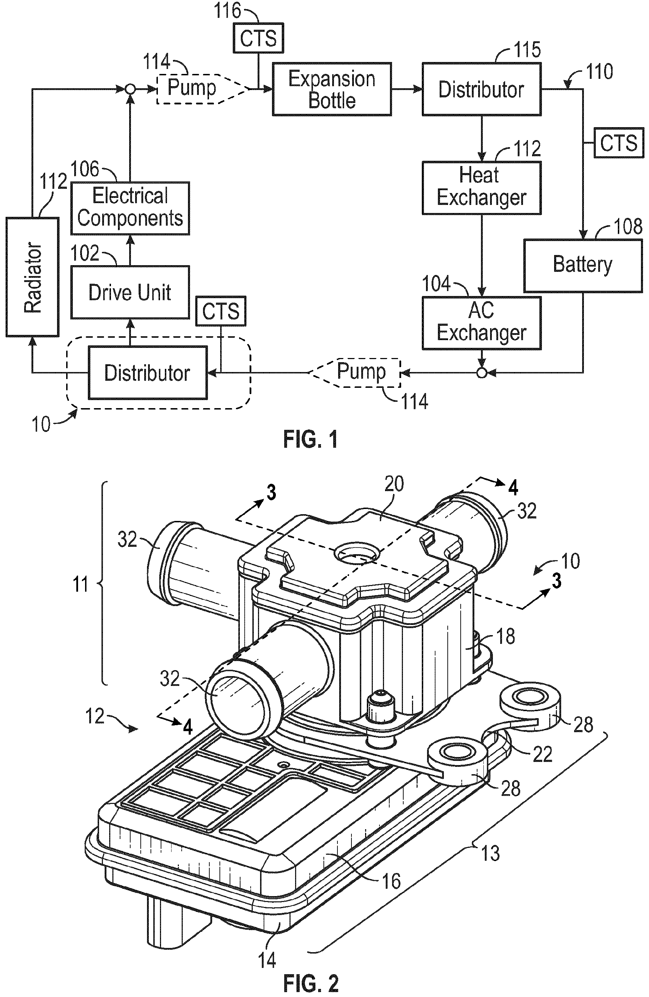

Figure 1 depicts some aspects of a typical example vehicle cooling system 100, which is highly schematic and for illustrative purposes only. The system 100 tends to be relatively complex and include numerous loops, sub-loops, and branches for carrying a cooling fluid, such as a liquid coolant (e.g., water ethylene glycol). One type of vehicle includes one or more motors 102, an occupant cabin thermal conditioning system 104, a charging system 106, and a battery 108. One or more cooling loops 110 circulate the coolant through these components. Typically, multiple heat exchangers 112 are disbursed throughout the cooling loops 110 to provide a heat exchange from the coolant to another fluid such as air or another liquid coolant. One or more pumps 114 circulate the coolant through the cooling loops 110.

Multiple fluid distribution valves 115 connect multiple passages to selectively regulate the flow of coolant, and thus its temperature, through the cooling loops 110. The fluid distribution valves 115 are distributed throughout the cooling loop 110 as well as throughout the vehicle. Numerous temperature sensors 116 are also disbursed throughout the cooling system 100 to monitor the temperature at various locations in order to enable coordination of the various components to achieve desired temperatures throughout the system.

A disclosed coolant distributor valve 10, shown in Figure 2, is designed to provide improved internal sealing to prevent internal coolant leaks that could damage sensitive electronic components or otherwise cause premature failure. The coolant distributor valve 10 has a multi-piece housing 12 with multiple portions that are secured to one another by one or more attachment techniques (e.g., welding, fasteners, glue, sealant, etc.). In the example, there are two main housing portions: a valve body portion 11 and an electronics portion 13, which are fluidly separated from one another. In one example shown in Figures 2-6, the electronics portion 13 is provided by first and second housing portions 14, 16, and the valve body portion 11 is provided by third and fourth housing portions 18, 20.

The coolant distributor valve 10 is designed to be configurable to provided flexibility in both packaging and versatility in its use within a cooling system. One example of this flexibility is a reconfigurable bracket 22 operatively mounted to the housing 12, which can be oriented in several different discrete positions relative to the housing 12. The bracket 22 includes mounting features (e.g., pair of mounting ears 28) that are used to secure the coolant distributor valve 10 to the vehicle. With reference to The bracket 22 be clocked to a desired orientation based upon the packaging constraints within the vehicle.

The valve body portion 11 may also be clocked to a desired orientation relative to the electronics portion 13. Fasteners secure the valve body portion 11 to the electronics portion 13 (e.g., second and third housing portions 16, 18) to one another, which captures the bracket 22.

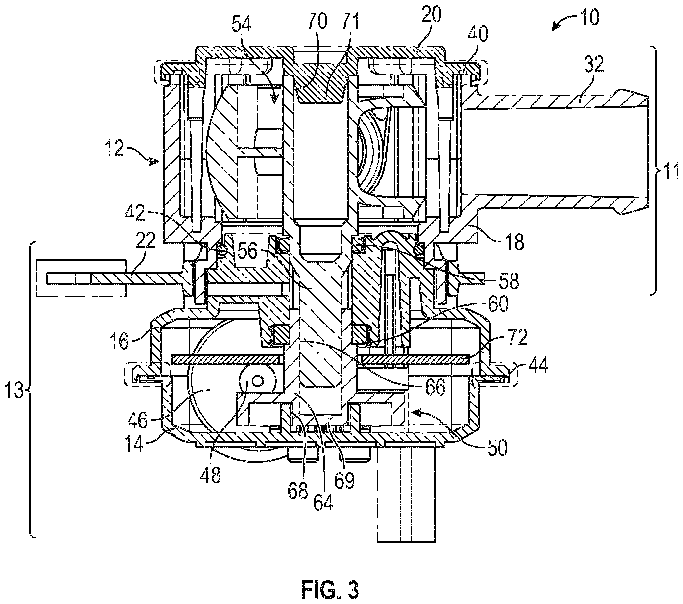

The various portions of the housing 12 are secured to and sealed with respect to one another using any number of techniques. In one example, shown in Figure 3, the first and second housing portions 14, 16 are welded to one another at 40, as are the third and fourth housing portions 18, 20 (at 44). The second and third housing portions 16, 18 are sealed with an O-ring 42 and secured using the fasteners 36 (Fig. 2).

Referring to Figures 3-5, a valve 54 is arranged in a coolant passage within the valve body portion 11 and is configured to rotate between multiple positions to fluidly connect and disconnect the fluid connectors 32 to one another and regulate the flow of coolant (e.g., water ethylene glycol) through the cooling system 100. The coolant distributor valve 10 diverts coolant from the input port to a selected output port provided by the fluid connections 32 and thereby connects at least two cooling loops (e.g., including at least two of a battery, a vehicle cabin, a charging electronics and a motor), for example, based upon a detected coolant temperature or component temperature.

The electronics portion 13 contains sensitive electronic components like a motor 46 electrically connected to a printed circuit board (PCB) 72. The controller (e.g., PCB 72) may be a hardware device for executing software, particularly software stored in memory. The controller (e.g., PCB 72) can be a custom made or commercially available processor, a central processing unit (CPU), an auxiliary processor among several processors associated with the controller, a semiconductor-based microprocessor (in the form of a microchip or chip set) or generally any device for executing software instructions.

The memory can include any one or combination of volatile memory elements (e.g., random access memory (RAM, such as DRAM, SRAM, SDRAM, VRAM, etc.)) and/or nonvolatile memory elements (e.g., ROM, hard drive, tape, CD-ROM, etc.). Moreover, the memory may incorporate electronic, magnetic, optical, and/or other types of storage media. The memory can also have a distributed architecture, where various components are situated remotely from one another, but can be accessed by the processor.

In terms of hardware architecture, such a computing device can include a processor, memory, and one or more input and/or output (I/O) device interface(s) that are communicatively coupled via a local interface. The local interface can include, for example but not limited to, one or more buses and/or other wired or wireless connections. The local interface may have additional elements, which are omitted for simplicity, such as controllers, buffers (caches), drivers, repeaters, and receivers to enable communications. Further, the local interface may include address, control, and/or data connections to enable appropriate communications among the aforementioned components.

The software in the memory may include one or more separate programs, each of which includes an ordered listing of executable instructions for implementing logical functions. A system component embodied as software may also be construed as a source program, executable program (object code), script, or any other entity comprising a set of instructions to be performed. When constructed as a source program, the program is translated via a compiler, assembler, interpreter, or the like, which may or may not be included within the memory.

The disclosed input and output devices that may be coupled to system I/O interface(s) may include input devices, for example but not limited to, a keyboard, mouse, scanner, microphone, camera, mobile device, proximity device, etc. Further, the output devices, for example but not limited to, a printer, display, etc. Finally, the input and output devices may further include devices that communicate both as inputs and outputs, for instance but not limited to, a modulator/demodulator (modem; for accessing another device, system, or network), a radio frequency (RF) or other transceiver, a telephonic interface, a bridge, a router, etc.

When the controller (e.g., PCB 72) is in operation, the processor can be configured to execute software stored within the memory, to communicate data to and from the memory, and to generally control operations of the computing device pursuant to the software. Software in memory, in whole or in part, is read by the processor, perhaps buffered within the processor, and then executed.

The electronics portion 13 houses an electrical actuator, such as the motor 46, which includes a drive gear 48 that rotationally drives the valve 54 via a coupling. Since this coupling operatively connected between the motor 46 and the valve 54 must extend between the valve body portion 11 containing the coolant and the electronics portion 13 that must remain dry, sealing this coupling reliably is important.

Typically, a coolant distributor valve is provided by multiple housing secured by welding and fasteners. One housing portion carries one seal that seals one end of the coupling, and another, separate housing portion carries another seal that seals another end of the coupling. During assembly the housing portions carrying the seals must maintain concentricity between both seals. Any deviation may result in misalignment of a coupling shaft relative to the seals, which may cause seal wear, gear wear, excessive torque, and/or binding or slow movement (response time) in the assembly. To address this problem, disclosed first and second seals 58, 60, are supported by a housing portion provided by a common, monolithic unitary structure, which helps prevent coolant past the coupling due to misalignment. The shaft support housing portion is provided by a molded, cast and/or machined single piece part.

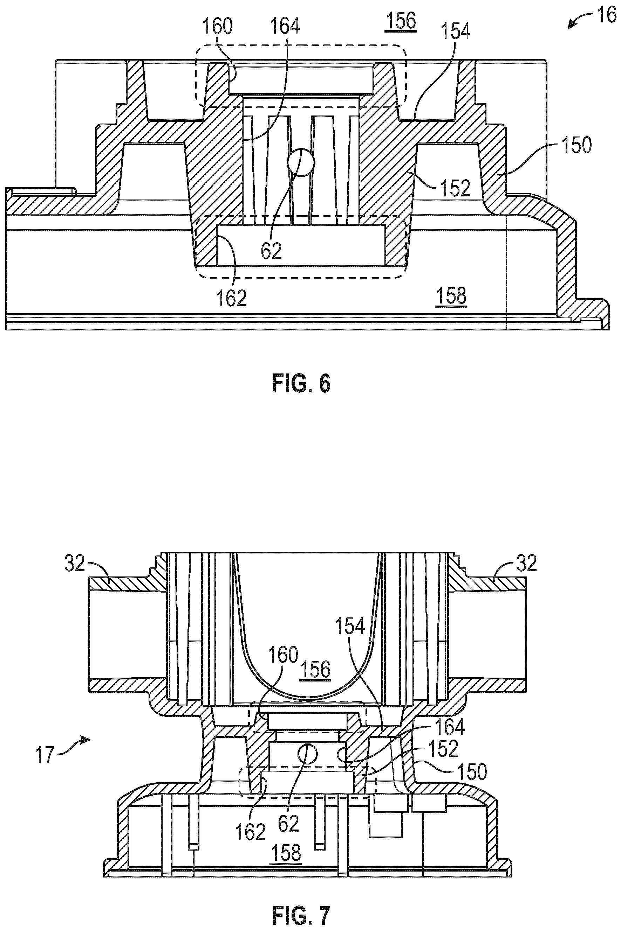

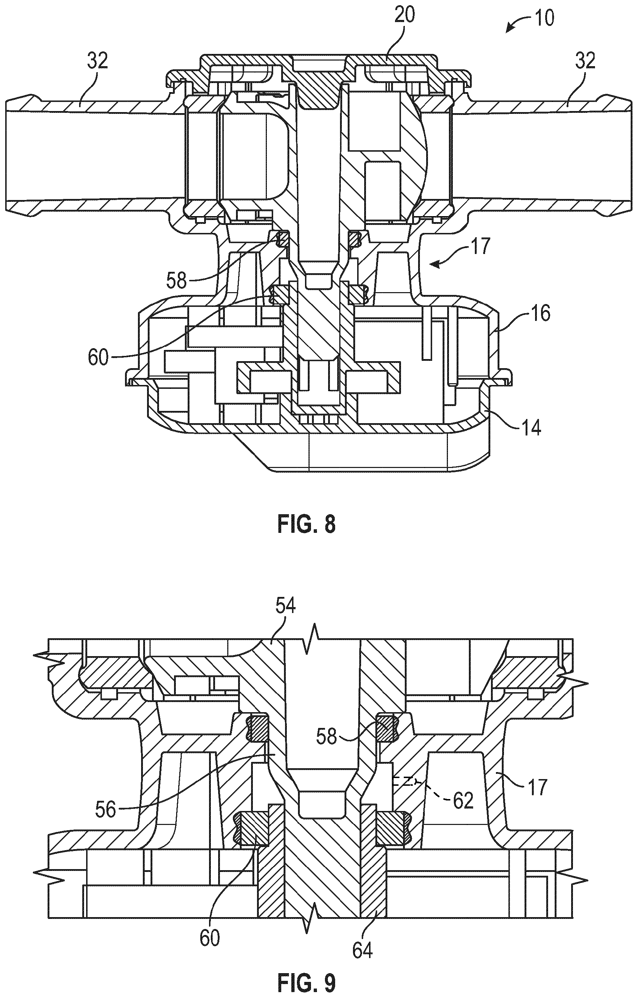

In the example shown in Figures 3-6, the unitary shaft support housing is provided by the second housing portion 16. In the example shown in Figures 7-9, the unitary shaft support housing is provided by a housing portion 17, which is a combination of the second and third housing portions 16, 18.

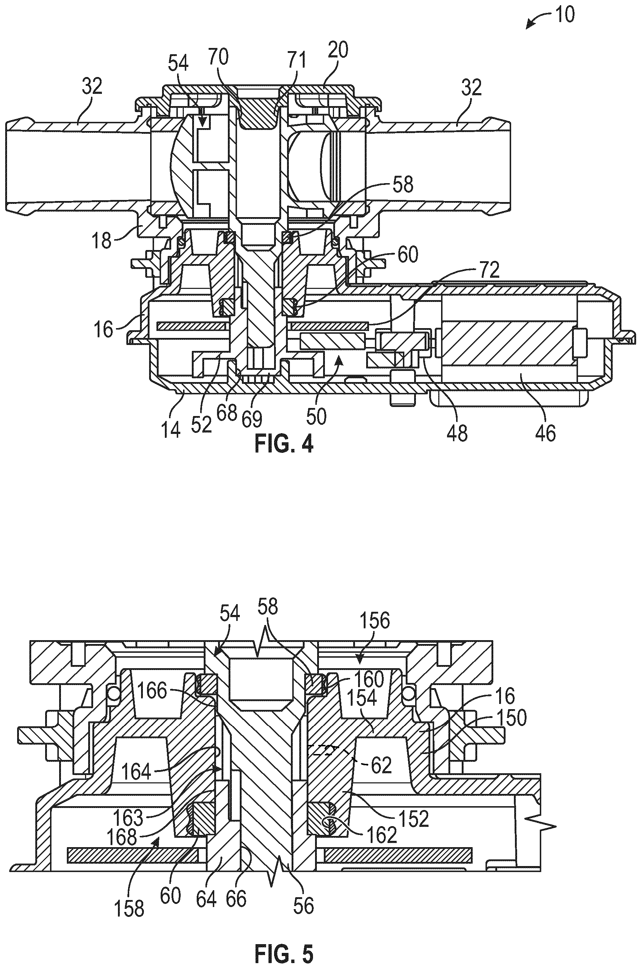

Returning to Figures 4-6, the shaft support housing portion (i.e., second housing portion 16) includes an outer wall 150 connected to an inner wall 152, which is generally annular in shape, by a web 154. The shaft support housing portion has a first side 156 (near where the valve 54 is arranged) opposite a second side 158 (near were the electronic components are arranged). The first and second sides 156, 158 of the inner wall 152 respectively have first and second bores 160, 162, which are formed concentrically with one another in the same part during machining or molding thus ensuring alignment. The first and second seals 58, 60 are respectively mounted in the first and second bores 160, 162. In this manner, the disclosed seal concentricity does not rely on a less precise assembly process.

As best shown in Figure 6, a cavity 163 is provided by the inner wall 152 and between the first and second seals 58, 60. A vent hole 62 extends through the inner wall 152 to fluidly connect the cavity 163 to atmosphere. The coolant is at a higher pressure than atmosphere during operation. In the event that coolant undesirably seeps past the first seal 58, the coolant can escape the cavity 163 through the vent hole 62. Coolant in the cavity 163 will not be under pressure and thus, would be less likely to leak past the second seal 60 to the second side 158 having the electronic components.

The inner wall 152 has a central hole 164 through which the coupling or shaft between the valve 54 and gear train 50 extends. The gear train 50 has a drive lug 52. The coupling includes first and second shafts coupled to one another, for example, a first shaft 56 extending from the valve 54 that is nested in a slip-fit splined relationship relative to a second shaft 64 extending from the drive lug 52. The first and second shafts 56, 64 respectively include first and second outer diameters 166, 168 that respectively engaging the first and second seals 58, 60. The slight slip-fit also helps accommodate any misalignment in the coupling that would unevenly load the first and second seals 58, 60, potentially causing them to leak.

In one example the coolant distributor valve 10 is assembled by installing the first and second seals 58, 60 into the first and second bore 160, 162 in the shaft support housing portion. The valve 54 is inserted into the housing and adjacent to the first side 156, sealing the first outer diameter 166 relative to the first seal 58. The drive lug 52 is coupled to the valve 54 at the second side 158, which seals the second outer diameter 168 relative to the second seal 60.

The remainder of the gear train 50, the motor 46 and other electronic components are arranged electronic components on the second side 158 and secured between the first and second housing portions 14, 16 or the first housing portion 14 and housing portion 17. The first housing portion 14 may provide a pilot 68 that cooperates with a protrusion 69 on the drive lug 52 to support one end of the coupling. The fourth housing portion 20, or cover, is secured to the third housing portion 18 or housing portion 17 to enclose the valve 54. The fourth housing portion 20 includes a protrusion 71 that is received in a hole 70 in the valve 54 to support an opposite end of the coupling.

The example shown in Figures 7-9 is assembled in a similar manner to the example illustrated in Figures 3-6.

It should also be understood that although a particular component arrangement is disclosed in the illustrated embodiment, other arrangements will benefit herefrom. Although particular step sequences are shown, described, and claimed, it should be understood that steps may be performed in any order, separated or combined unless otherwise indicated and will still benefit from the present invention.

Although the different examples have specific components shown in the illustrations, embodiments of this invention are not limited to those particular combinations. It is possible to use some of the components or features from one of the examples in combination with features or components from another one of the examples.

Although an example embodiment has been disclosed, a worker of ordinary skill in this art would recognize that certain modifications would come within the scope of the claims. For that reason, the following claims should be studied to determine their true scope and content.

## Claims

1. A coolant distributor valve for a vehicle cooling system, comprising:
a housing including a shaft support housing portion providing a monolithic, unitary structure, the shaft support housing portion having a first side opposite a second side, the first and second sides respectively including first and second bores;
a valve arranged in the housing adjacent to the first side;
electronic components arranged in the housing adjacent to the second side, the electronic components configured to move the valve between multiple positions;
first and second seals respectively mounted in the first and second bores; and
a shaft extending through and engaging the seals, the shaft operatively connecting the electronic components to the valve.

2. The coolant distributor valve of claim 1, wherein the shaft support housing portion is provided by a molded, cast and/or machined single piece part.

3. The coolant distributor valve of claim 1 or 2, wherein the housing includes an electronics housing portion secured to the shaft support housing portion to enclose the electronic components.

4. The coolant distributor valve of claim 3, comprising a printed circuit board (PCB) arranged in the electronics housing portion, and an electrical actuator electrically connected to the PCB and arranged in the electronics housing portion, optionally wherein the electrical actuator is a motor, and a gear train coupled between the motor and the valve, optionally wherein the shaft is provided by first and second shafts coupled to one another, the first shaft extends from the valve, and the second shaft extends from the gear train.

5. The coolant distributor valve of claim 4, wherein the first and second shafts are nested relative to one another is splined relationship, and/or wherein the first and second shafts respectively include first and second outer diameters, the first and second outer diameters respectively engaging the first and second seals.

6. The coolant distributor valve of any preceding claim, wherein the shaft support housing portion provides a valve housing portion receiving the valve, and the housing includes a cover secured to the valve housing portion to enclose the valve.

7. The coolant distributor valve of any preceding claim, wherein a valve housing portion is secured to the shaft support housing portion, the valve arranged in the valve housing portion, optionally wherein the housing includes a cover secured to the valve housing portion to enclose the valve.

8. The coolant distributor valve of any preceding claim, wherein a cavity is provided between the first and second seals, and a vent hole is provided in the shaft support housing portion, the vent hole configured to fluidly connect the cavity to atmosphere.

9. A vehicle cooling system including the coolant distributor valve of any preceding claim, comprising multiple cooling loops, the coolant distributor valve interconnecting at least two of the multiple cooling loops, and the valve configured to move between multiple positions to direct a desired cooling flow through the at least two of the multiple cooling loops.

10. The vehicle cooling system of claim 9, wherein the cooling loops include at least two of a battery, a vehicle cabin, a charging electronics and a motor.

11. A method of assembling a coolant distributor valve, comprising:
providing a housing including a shaft support housing portion providing a monolithic, unitary structure, the shaft support housing portion having a first side opposite a second side, the first and second sides respectively including first and second bores;
installing a first seal in the first bore;
installing a second seal in a second bore;
inserting a valve in the housing adjacent to the first side;
arranging electronic components in the housing adjacent to the second side, the electronic components configured to move the valve between multiple positions; and
extending a shaft through and engaging the first and second seals, the shaft operatively connecting the electronic components to the valve.

12. The method of claim 11, wherein the first seal installing step is performed before the valve inserting step.

13. The method of claim 11 or 12, wherein the second seal installing step is performed before the electronic components arranging step.

14. The method of any one of claims 11 to 13, wherein the inserting step includes the shaft extending step through and engaging the first seal, and comprising a step of assembling a gear train in the housing, the gear train assembling step includes the shaft extending step through and engaging the second seal, optionally wherein the extending step includes extending a first shaft from the valve to engage the first seal, and extending a second shaft from the gear train to engage the second seal, the first and second shafts coupled to one another.

15. The method of any one of claims 11 to 14, comprising a step of forming a cavity with the first and second seals, the shaft support housing portion and the shaft, the shaft support housing including a vent hole in fluid communication with atmosphere.
